# EUROPEAN PATENT APPLICATION

(11) **EP 4 773 388 A1**
(43) Date of publication of application: **08.07.2026**
(21) Application number: 25762311.6
(22) Date of filing: 04.02.2025
(51) Int. Cl.: H01M 50/342, H01M 50/224, H01M 50/233, H01M 50/211, H01M 50/507, H01M 50/289

(54) **BATTERY MODULE AND BATTERY PACK INCLUDING SAME**

(30) Priority: 29.02.2024 KR 20240029489
(71) Applicant: LG Energy Solution, Ltd., Seoul 07335 (KR)
(72) Inventor: PARK, Jeong-Hoon, Daejeon 34122 (KR)
(74) Representative: Plasseraud IP
(86) International application number: PCT/KR2025/001634
(87) International publication number: WO 2025/183377

(57) **Abstract**

Disclosed is a battery module, which includes a cell stack including stacked battery cells; a module case having a gas venting hole in a lower plate and configured to accommodate the cell stack; and a venting guide member including a body portion having a property that is bendable by heat and a needle portion coupled to the body portion, and the venting guide member is disposed on the lower plate such that when a temperature of the body portion increases higher than a predetermined temperature, the body portion is bent and the needle portion faces and contacts the battery cell.

## Description

### TECHNICAL FIELD

The present disclosure relates to a battery module and a battery pack including the same, and more specifically, to a battery module with improved safety against thermal events and a battery pack including the same.

The present application claims priority to Korean Patent Application No. 10-2024-0029489 filed on February 29, 2024 in the Republic of Korea, the disclosures of which are incorporated herein by reference.

### BACKGROUND ART

As technology development and demand for various mobile devices, electric vehicles, energy storage systems (ESSs), or the like significantly increase, interest in and demand for secondary batteries as an energy source are rapidly increasing. Although nickel-cadmium batteries or nickel-hydrogen batteries have conventionally been used widely as secondary batteries, nowadays, lithium secondary batteries are widely used because they have advantages of free charging and discharging due to almost no memory effect, a very low self-discharge rate, and a high energy density, compared to nickel-based secondary batteries.

These lithium secondary batteries generally use lithium-based oxides and carbon materials as positive and negative electrode active materials, respectively. The lithium secondary batteries include an electrode assembly in which the positive and negative electrode plates, which are respectively coated with the positive and negative electrode active materials, are disposed with a separator therebetween, and an exterior case, i.e., a battery case, that seals and stores the electrode assembly with an electrolyte.

In general, secondary batteries may be classified, depending on the shape of the exterior case, into can-type secondary batteries in which the electrode assembly is accommodated in a metal can and pouch-type secondary batteries in which the electrode assembly is accommodated in a pouch of an aluminum laminate sheet.

Currently, the operating voltage of one lithium secondary battery cell widely used is approximately 2.5V to 4.5V. Therefore, in the case of electric vehicles or power storage devices that require large capacity and high output, a battery module or battery pack is configured by connecting multiple lithium secondary batteries in series and/or parallel and used as an energy source. In particular, in order to satisfy the output or capacity required for electric vehicles, the battery module or battery pack includes a large number of lithium secondary batteries.

In the battery module or the battery pack, for example, in a situation where a thermal event occurs, gas or flame may be generated so that heat continues to accumulate inside, and the heat may be rapidly spread between battery cells (Thermal Propagation). As a result, the battery cells may explode in a chain reaction, which may cause a serious risk to life and property of the user.

When a thermal event occurs, it is necessary to actively discharge the heat and pressure to the outside of the battery module to minimize damage before the heat and pressure inside the battery module explosively increases to cause chain explosion of the battery cells or collapse of the battery module.

### DISCLOSURE

### Technical Problem

The present disclosure is designed to solve the problems of the related art, and therefore the present disclosure is directed to providing a battery module that may effectively dissipate or relieve heat and pressure when a thermal event occurs.

The technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery module comprising: a cell stack including stacked battery cells; a module case having a gas venting hole in a lower plate and configured to accommodate the cell stack; and a venting guide member including a body portion having a property that is bendable by heat and a needle portion coupled to the body portion, wherein the venting guide member is disposed on the lower plate such that when a temperature of the body portion increases higher than a predetermined temperature, the body portion is bent and the needle portion faces and contacts the battery cell.

The body portion may include a first metal portion and a second metal portion which are made of different metals having different thermal expansion rates and overlapped vertically.

The second metal portion may have a higher thermal expansion rate than the first metal portion, and the venting guide member may be disposed on the lower plate of the module case so that the second metal portion faces the lower plate of the module case.

The body portion may include a needle insert hole into which the needle portion is inserted; and an elastic member disposed in the needle insert hole and coupled to the needle portion.

The lower plate of the module case may include a needle blocking portion configured to compress the elastic member and block a front side of the needle portion to prevent the needle portion inserted into the needle insert hole from protruding.

The body portion may include a rotary shaft portion formed to protrude on a side surface thereof, and the lower plate of the module case may have a shaft mounting portion that is fitted into the rotary shaft portion.

The lower plate of the module case may include a groove engraved in a shape corresponding to the body portion, and the venting guide member may be inserted into the groove.

The needle portion may be provided in plurality, and a spacing between the needle portions may correspond to a thickness of the battery cell.

The module case may include a top plate configured to cover an upper portion of the cell stack; a bottom plate configured to cover a lower portion of the cell stack and formed on the lower plate; a pair of side plates configured to cover both sides of the cell stack, respectively; and a pair of end covers configured to cover a front side and a rear side of the cell stack, respectively.

The battery cells may be pouch-type battery cells, the gas venting hole may be provided in plurality at predetermined intervals along a width direction of the bottom plate, and the gas venting hole may be provided at a location vertically corresponding to a cell terrace formed by thermally fusing pouch sheets in the pouch-type battery cell.

The venting guide member may be arranged on the bottom plate along a width direction of the bottom plate alternately with the gas venting hole.

The battery module may further comprise bus bars electrically connected to electrode leads provided to the battery cells; and a bus bar frame configured to support the bus bars and having lead slots through which the electrode leads passes, the bus bar frame being mounted to a front portion or a rear portion of the cell stack, and the bus bars may include a first bus bar and a second bus bar arranged to overlap each other with the electrode lead being interposed therebetween, and the electrode lead may be compressively fixed between the first bus bar and the second bus bar.

The battery cells may be pouch-type battery cells, which are stacked in one direction in a state where broad surfaces thereof are erected, the cell stack may include a plurality of barrier plates interposed between the battery cells at predetermined intervals along the one direction to restrict movement of heat or gas between the battery cells, and each of the plurality of barrier plates may have a distal end fitted into the bus bar frame so that the battery cells and the gas venting holes are partitioned into a predetermined number.

According to one aspect of the present disclosure, there may also be provided a battery pack including the battery module described above.

### Advantageous Effects

According to the present disclosure, a battery module capable of effectively dissipating or relieving heat and pressure when a thermal event occurs may be provided.

In particular, by the venting guide member according to the present disclosure, a hole is formed in a trigger battery cell having a thermal abnormality sign, and high-temperature gas, particles, etc. emitted from the trigger battery cell may be discharged to the outside of the module case through the gas venting hole formed in the lower plate of the module case.

In addition, the present disclosure may have various other effects, and these will be described in the respective embodiments, or description of effects that may be easily inferred by those skilled in the art will be omitted.

### DESCRIPTION OF DRAWINGS

FIG. 1 is a perspective view schematically showing a battery module according to an embodiment of the present disclosure.
FIG. 2 is an exploded perspective view showing the battery module in FIG. 1.
FIG. 3 is a perspective view showing a cell stack of FIG. 2.
FIG. 4 is a drawing showing a bottom plate of a module case of FIG. 2.
FIG. 5 is a drawing showing a body portion and a needle portion partially inserted into the body portion as a venting guide member according to an embodiment of the present disclosure.
FIG. 6 is a drawing showing a body portion and a needle portion protruding from the body portion as a venting guide member according to an embodiment of the present disclosure.
FIG. 7 is a schematic cross-sectional view showing a venting guide member, taken along A-A' of FIG. 6.
FIG. 8 is an enlarged view showing a portion of a bottom plate according to an embodiment of the present disclosure.
FIG. 9 is a view showing a venting guide member mounted on the bottom plate of FIG. 8.
FIG. 10 is a view showing a pre-operational state of the venting guide member according to an embodiment of the present disclosure.
FIG. 11 is a view showing an operating state of the venting guide member according to an embodiment of the present disclosure.
FIG. 12 is a diagram showing an example in which a cell stack and a bus bar frame according to an embodiment of the present disclosure are assembled.
FIG. 13 is a diagram showing a bus bar frame to which a frame cover and a compression bus bar are coupled in FIG. 12.
FIG. 14 is a schematic sectional view showing the cell stack and the bus bar frame assembled with each other according to an embodiment of the present disclosure.
FIG. 15 is a diagram schematically showing a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

The sizes of respective elements or specific parts of each element shown in the attached drawings are exaggerated, omitted, or simplified for convenience of explanation and clarification thereof. Accordingly, the sizes of respective elements do not entirely reflect their actual sizes. Descriptions of related known functions or configurations, which may obscure the subject matter of the present disclosure, will be omitted.

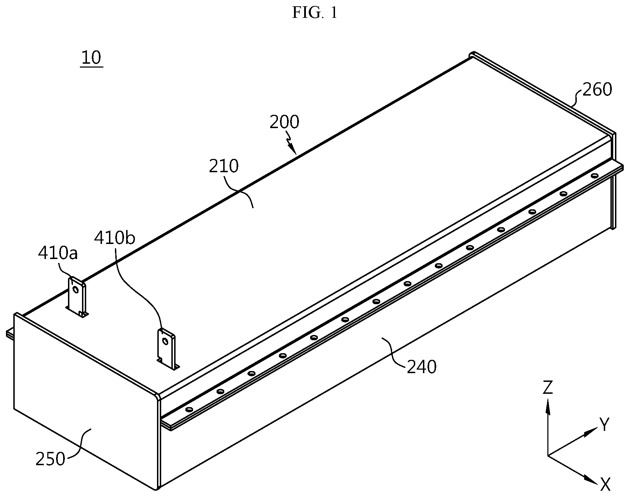

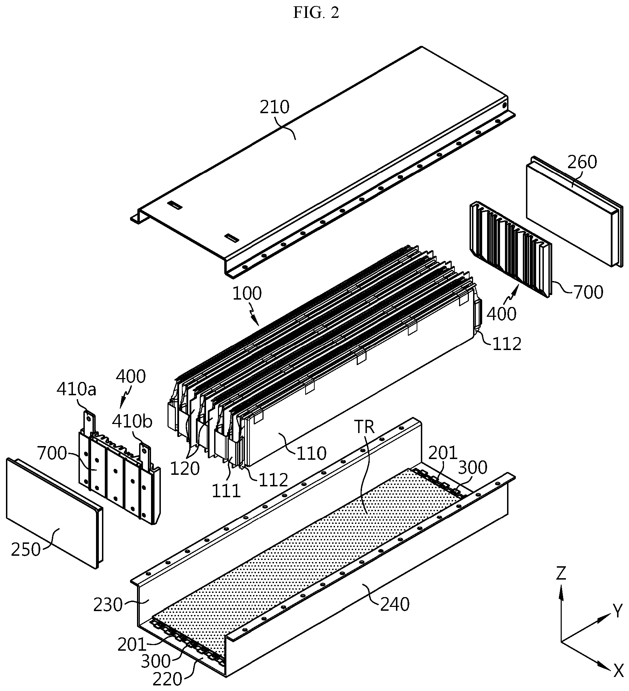

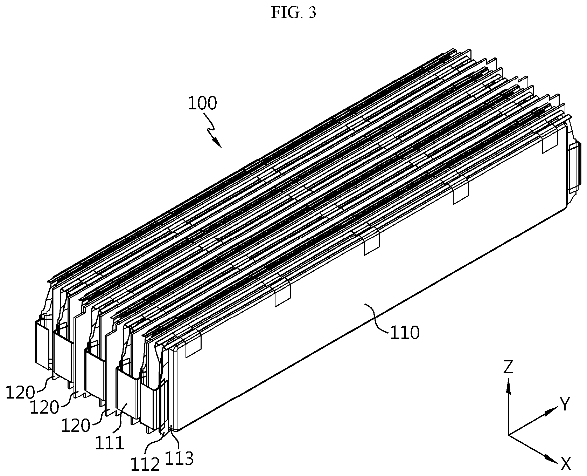

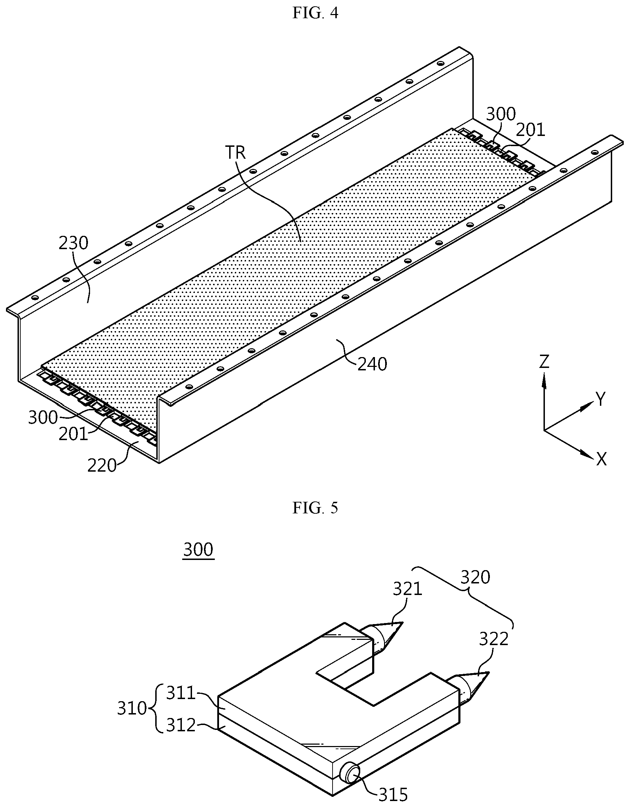

FIG. 1 is a perspective view schematically showing a battery module according to an embodiment of the present disclosure, FIG. 2 is an exploded perspective view showing the battery module in FIG. 1, FIG. 3 is a perspective view showing a cell stack of FIG. 2, and FIG. 4 is a drawing showing a bottom plate of a module case of FIG. 2.

Referring to FIGS. 1 to 4, a battery module 10 according to an embodiment of the present disclosure includes a cell stack 100 having stacked battery cells 110, a module case 200 having a gas venting hole 201 in a lower plate and accommodating the cell stack 100, and a venting guide member 300 that operates when the temperature exceeds a certain level.

The cell stack 100 may be an assembly of battery cells 110, as shown in FIGS. 2 and 3, in which a plurality of battery cells 110 are erected and stacked in a horizontal direction (X direction). In this embodiment, the battery cell 110 is a pouch-type battery cell 110. The pouch-type battery cell 110 may include an electrode assembly, an electrolyte, a pouch case for sealably storing the electrode assembly and the electrolyte, and an electrode lead 111.

The pouch case may include two pouch sheets, and at least one of them may have an electrode assembly accommodation groove formed therein. An electrode assembly and an electrolyte are received inside the electrode assembly accommodation groove, which is covered by another pouch sheet, and the edges of the two pouch sheets are thermally fused. In this pouch-type battery cell 110, a portion where the pouch sheets are thermally fused to be sealed is called a sealing portion. The electrode lead 111 has one end connected to the electrode assembly inside the pouch case and the other end protruding to the outside of the pouch case, and a portion between the one end and the other end is fixed into the sealing portion when the pouch sheets are thermally fused. A portion of the electrode lead 111 exposed to the outside of the pouch case may function as an electrode terminal of the pouch-type battery cell 110.

For reference, the pouch-type battery cell 110 that packages an electrode assembly with two pouch sheets has four sealing portions. Here, the four sealing portions refer to a front sealing portion and a rear sealing portion at which the electrode leads 111 protrude, and two side sealing portions extending in the longitudinal direction of the electrode assembly. Meanwhile, a pouch-type battery cell 110 that packages an electrode assembly by folding one pouch sheet has three sealing portions. Here, the three sealing portions refer to a front sealing portion and a rear-side sealing portion at which the electrode leads 111 protrude, and one side sealing portion. In particular, in the pouch-type battery cell 110, the front sealing portion and the rear sealing portion are referred to as a cell terrace 112.

The cell stack 100 may further include a barrier plate 120 disposed between the battery cells 110. The barrier plate 120 may be formed in a plate shape using a material having excellent thermal insulation and fire resistance. The barrier plate 120 may serve to block heat transfer between the battery cells 110 and absorb pressure when the battery cells 110 swell.

The module case 200 may include a case body and a pair of end covers 250, 260, as shown in FIGS. 1 and 2.

The case body may include a top plate 210 covering the upper portion of the cell stack 100, a bottom plate 220 covering the lower portion of the cell stack 100, and a pair of side plates 230, 240 covering both sides of the cell stack 100, respectively.

The bottom plate 220 and the pair of side plates 230, 240 may be formed integrally. The bottom plate 220 and the pair of side plates 230, 240 provided integrally are also referred to as a U-frame. The U-frame and the top plate 210 may be coupled by bolting, welding, adhesion, or the like. Meanwhile, unlike this embodiment, the top plate 210, the bottom plate 220, and the pair of side plates 230, 240 may be formed integrally in a rectangular tube shape. The end covers 250, 260 may be coupled to open front and rear sides of the case body.

In this embodiment, the top plate 210 may have a terminal passing hole through which a terminal bus bar of the battery module 10 may be drawn out upward. The terminal bus bar includes a positive electrode terminal bus bar 410a and a negative electrode terminal bus bar 410b. However, unlike this embodiment, the terminal bus bar may be designed to face forward by penetrating, for example, the end cover 250, 260.

The lower plate of the module case 200 may be formed with the bottom plate 220. A thermal resin TR may be applied to an upper surface of the bottom plate 220, and the cell stack 100 may be mounted on the thermal resin TR. At this time, lower edges of the battery cells 110 may be in contact with the thermal resin TR. In this case, thermal conductivity and fixation between the battery cells 110 and the bottom plate 220 may be increased. In particular, heat generated from each battery cell 110 during charging and discharging may be effectively transferred to the bottom plate 220 through the thermal resin TR and dissipated. Although not shown, if a heatsink (not shown) is additionally mounted on the lower surface of the bottom plate 220, the heat of the battery cells 110 may be absorbed more quickly.

If a swelling phenomenon occurs since a large amount of gas is generated during overcharging, and if this worsens, in the pouch-type battery cell 110, the bonding strength of the thermally fused sealing portion may be lowered, so that the corresponding portion may rupture and gas may be discharged. At this time, among the sealing portions of the pouch-type battery cell 110, the cell terrace 112 has electrode leads 111 interposed therein, so the cell terrace 112 generates relatively more heat and has lower bonding strength than other portions. Due to this, the cell terrace 112 of the pouch-type battery cell 110 is most likely to be damaged when the internal pressure increases.

Thus, in the battery module 10 according to an embodiment of the present disclosure, the gas venting holes 201 are formed at both edge areas of the bottom plate 220 corresponding vertically to the cell terrace 112 so that gas, etc. emitted when the cell terrace 112 is damaged may be immediately discharged to the outside of the battery module 10.

Specifically, the gas venting holes 201 according to this embodiment may be provided at a predetermined interval along the width direction (X direction) of the bottom plate 220, as shown in FIG. 2 or FIG. 4. In addition, the gas venting hole 201 may be provided at a position corresponding vertically to the cell terrace 112 of the pouch-type battery cells 110 when the cell stack 100 is accommodated in the module case 200. In this embodiment, the pouch-type battery cell 110 has a cell terrace 112 at the front side and the rear side, respectively. The gas venting hole 201 may be provided at the front side and the rear side of the bottom plate 220, respectively, to correspond to the cell terrace 112 of the pouch-type battery cell 110.

That is, the gas venting hole 201 may be provided in plurality along the same direction as the stacking direction of the pouch-type battery cells 110. Also, the plurality of gas venting holes 201 may be provided at positions adjacent to the front sealing portion and the rear sealing portion of the pouch-type battery cells 110 in the bottom plate 220.

The gas venting hole 201 may play a role in preventing a pressure difference between the inside and the outside of the module case 200 from occurring under normal circumstances. In addition, when a thermal event occurs, the gas venting hole 201 discharges high-temperature gas, etc. emitted from the battery cell 110 to the outside, thereby preventing excessive heat accumulation inside the battery module 10 and preventing the internal pressure of the battery module 10 from rapidly increasing.

In particular, according to the embodiment of FIG. 2 or 4, when high-temperature gas or the like is ejected from a trigger battery cell 110 in which a thermal event has occurred, among the battery cells 110, the high-temperature gas or the like may be guided and discharged in the downward direction of the module case 200 through the gas venting holes 201, rather than being diffused into the module case 200. In this case, other battery cells 110 adjacent to the trigger battery cell 110 may be prevented from being significantly damaged by heat. Also, a large amount of gas may be more quickly discharged to the outside of the battery module 10, thereby preventing the internal pressure of the battery module 10 from rapidly increasing.

Meanwhile, the battery module 10 according to the present disclosure includes not only the gas venting hole 201, but also a venting guide member 300 as a means for making a hole in the battery cell 110 to discharge gas from the battery cell 110 and relieve internal pressure when a thermal event occurs.

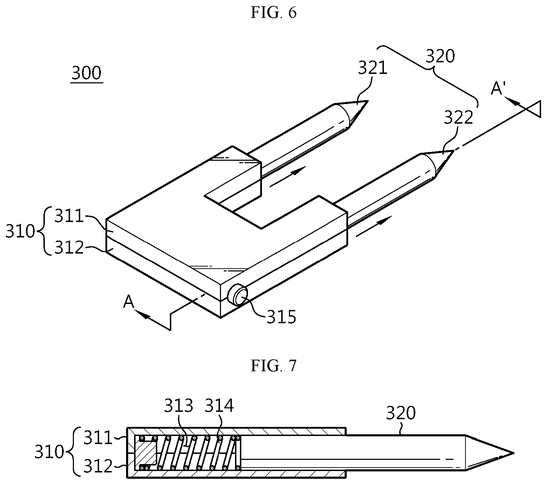

As shown in FIGS. 5 and 6, the venting guide member 300 may include a body portion 310 and a needle portion 320 coupled to the body portion 310.

The body portion 310 may be provided to have a property that allows the shape to be bent by heat. In this embodiment, the body portion 310 may include a first metal portion 311 and a second metal portion 312 that are made of different metals having different thermal expansion rates and are overlapped vertically to form a layered structure. The first metal portion 311 and the second metal portion 312 may be coupled into one body by mechanical fastening, such as welding or riveting.

For example, steel may be used as the first metal portion 311, and copper or brass may be used as the second metal portion 312. Copper or brass is a metal having a higher thermal expansion rate than the steel. In other words, the second metal portion 312 is a metal having a higher thermal expansion rate than the first metal portion 311. In this way, when the body portion 310 is made of dissimilar metals having different thermal expansion rates, the second metal portion 312 expands more than the first metal portion 311 when heat is applied. However, since the first metal portion 311 and the second metal portion 312 are firmly coupled to each other, the body portion 310 may bend toward the first metal portion 311.

In this embodiment, the body portion 310 may further include a needle insert hole 313 therein and an elastic member 314 disposed inside the needle insert hole 313 and having one end coupled to the inside of the needle insert hole 313 and the other end coupled to the needle portion 320.

For example, as shown in FIG. 7, the needle insert hole 313 may be defined as a space or passage provided inside the body portion 310 so that the needle portion 320 may be inserted into the body portion 310. In addition, the elastic member 314 may be defined as a means for providing force so that the needle portion 320 may be elastically protruded from the inside to the outside of the body portion 310. For example, a spring may be employed as the elastic member 314.

The body portion 310 may further include a rotary shaft portion 315 protruding on a side surface thereof. The rotary shaft portion 315 is a portion that is fitted into a shaft mounting portion 225 provided on the lower plate of the module case 200, explained later. The venting guide member 300 may be installed on the lower plate of the module case 200 so as to be rotatable about the rotary shaft portion 315.

The needle portion 320 may have an end in the shape of a nail or a needle as a means for making a hole in the battery cell 110. The needle portion 320 may be provided in plurality, and the spacing between the needle portions 320 may be configured to correspond to the thickness of the battery cell 110.

As shown in FIGS. 5 and 6, the needle portion 320 may include a first needle portion 321 and a second needle portion 322 that are coupled in a protruding form from the body portion 310 and spaced apart from each other by approximately the thickness of the battery cell 110. As described later, two adjacent different battery cells 110 may be perforated by contacting the first needle portion 321 and the second needle portion 322.

In this embodiment, the venting guide member 300 may be disposed on the lower plate of the module case 200 such that the second metal portion 312 faces the lower plate of the module case 200. Also, the venting guide member 300 may be disposed on the lower plate of the module case 200, i.e., the bottom plate 220, along the width direction of the bottom plate 220, alternately with the aforementioned gas venting hole 201. In addition, the venting guide member 300 may be disposed adjacent to the front sealing portion or the rear sealing portion of the battery cell 110.

When the venting guide member 300 receives heat from the bottom plate 220 or its temperature increases higher than a certain temperature due to the influence of high-temperature particles or flames, the body portion 310 is bent at a predetermined angle or more with respect to the lower plate and faces the battery cell 110, and at this time, the needle portion 320 comes into contact with the battery cell 110, so that a hole may be formed in the battery cell 110.

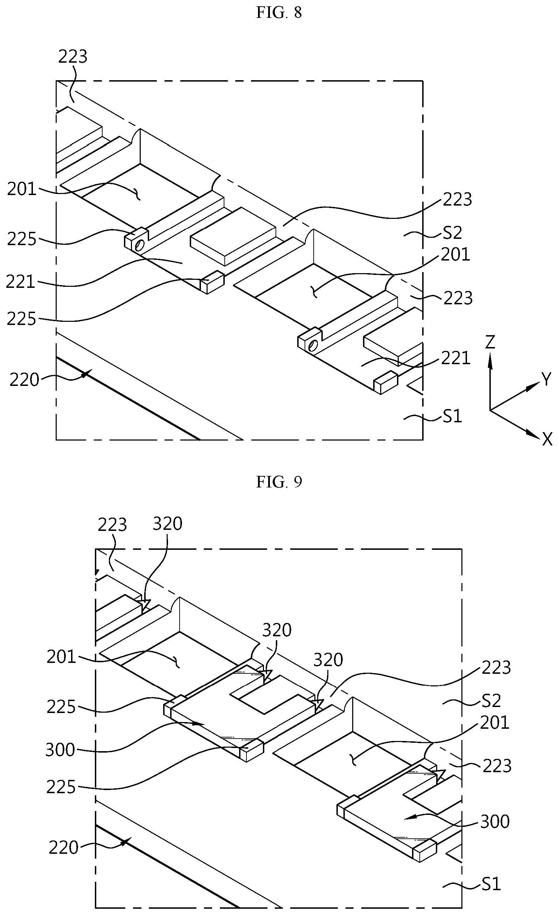

Hereinafter, an installation example and an operation example of the venting guide member 300 according to an embodiment of the present disclosure will be described in more detail with reference to FIGS. 8 to 11. Hereinafter, the lower plate of the module case 200 means the bottom plate 220 described above.

First, referring to FIG. 8, the lower plate of module case 200 according to an embodiment of the present disclosure may further include a groove 221, a needle blocking portion 223, and a shaft mounting portion 225.

The groove 221 may be provided in an engraved shape corresponding to the body portion 310 of the venting guide member 300. The groove 221 may be provided between the gas venting holes 201 described above. The venting guide member 300 may be inserted into this groove 221. At this time, the venting guide member 300 is inserted into the groove 221 such that the second metal portion 312 among the first metal portion 311 and the second metal portion 312 of the body portion 310 is located downward. By forming the groove 221 in the lower plate of the module case 200 in this way, it is easy to install the venting guide member 300 at a correct position and the movement of the venting guide member 300 may be suppressed.

The needle blocking portion 223 (see FIG. 6) plays a role of blocking the front side of the needle portion 320 to prevent the needle portion 320 inserted into the needle insert hole 313 of the body portion 310 from protruding from the needle insert hole 313.

As shown in FIG. 9, the venting guide member 300 may be arranged in the groove 221 in a state where the needle portion 320 is inserted into the inside of the body portion 310. The needle blocking portion 223 may be provided at an end of the groove 221 toward the battery cell 110 or at a position slightly spaced apart from the groove 221, and may be formed higher than the needle portion 320 of the venting guide member 300 mounted in the groove 221. The lower plate of the module case 200 may have a step. That is, the lower plate of the module case 200 may have a first layer S1 on which the venting guide member 300 is arranged and a second layer S2 on which the battery cells 110 are arranged, and the second layer S2 may be provided higher than the first layer S1. In this case, the step surface between the first layer S1 and the second layer S2 may function as the needle blocking portion 223.

The needle blocking portion 223 may be formed as a curved surface. When the body portion 310 is bent upward due to heat in the groove 221, the needle portion 320 may be guided along the curved surface of the needle blocking portion 223. In this case, the needle portion 320 may protrude from the body portion 310 toward the battery cell 110 more smoothly than the case where the needle blocking portion 223 is flat. In other words, when the needle blocking portion 223 is flat, the frictional force between the end of the needle portion 320 and the needle blocking portion 223 may increase, which may hinder the body portion 310 from bending upward and may damage the end of the needle portion 320. However, since the curved needle blocking portion 223 has a relatively small frictional force with the end of the needle portion 320, the above problem may not occur.

The shaft mounting portion 225 may have a fitting hole into which the rotary shaft portion 315 of the venting guide member 300 may be fitted, as shown in FIG. 8, and may have a structure protruding upward from the side surface of the groove 221. Meanwhile, unlike this embodiment, if the depth of the groove 221 is deep enough to completely insert the venting guide member 300, the shaft mounting portion 225 may be provided on the side surface of the groove 221.

The rotary shaft portion 315 of the venting guide member 300 may be provided on each side of the body portion 310 one by one. Two shaft mounting portions 225 may be provided to correspond to the two rotary shaft portions 315 of the venting guide member 300. As shown in FIG. 9, the venting guide member 300 may be mounted in the groove 221 in a state where the two rotary shaft portions 315 are fitted into the two shaft mounting portions 225. In this case, even if an external force is applied, the venting guide member 300 may be stably positioned in the groove 221 without being separated. In addition, when the body portion 310 is bent due to heat, the venting guide member 300 may be rotated about the rotary shaft portion 315 as an axis.

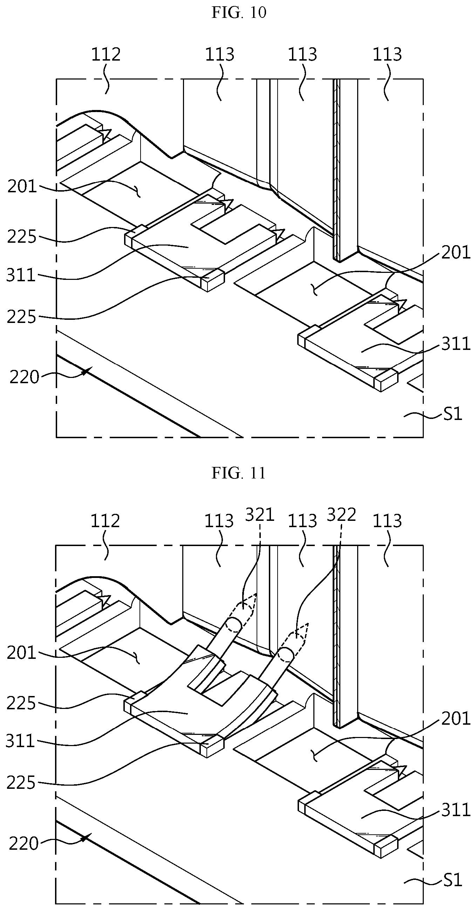

The venting guide members 300 may be installed on the lower plate of the module case 200 having the above configuration, as shown in FIG. 10. According to this embodiment, when a thermal event such as ignition occurs inside the battery module 10, the venting guide member 300 operates as shown in FIG. 11 to form a hole in the battery cell 110, thereby inducing high-temperature gas, etc. to be discharged from the battery cell 110. For example, when the body portion 310 receives heat, since the thermal expansion rate of the second metal portion 312 is greater than the thermal expansion rate of the first metal portion 311 as described above, the body portion 310 bends upward, and at this time, the needle portion 320 inserted into the body portion 310 protrudes toward the body 113 of the battery cell 110, so that a hole may be formed in the battery cell 110. In particular, the venting guide member 300 according to this embodiment is configured to make a hole in the body 113 or the sealing portion of the battery cell 110 near the gas venting hole 201, so that high-temperature gas, etc. may be guided and discharged to the outside of the battery module 10 more smoothly and quickly.

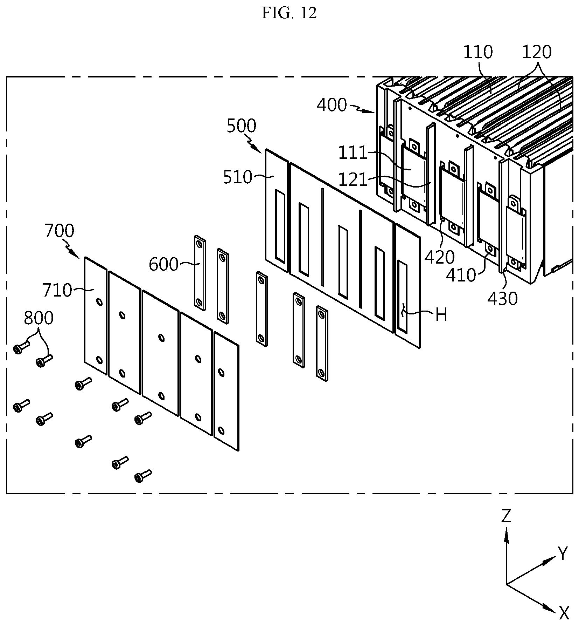

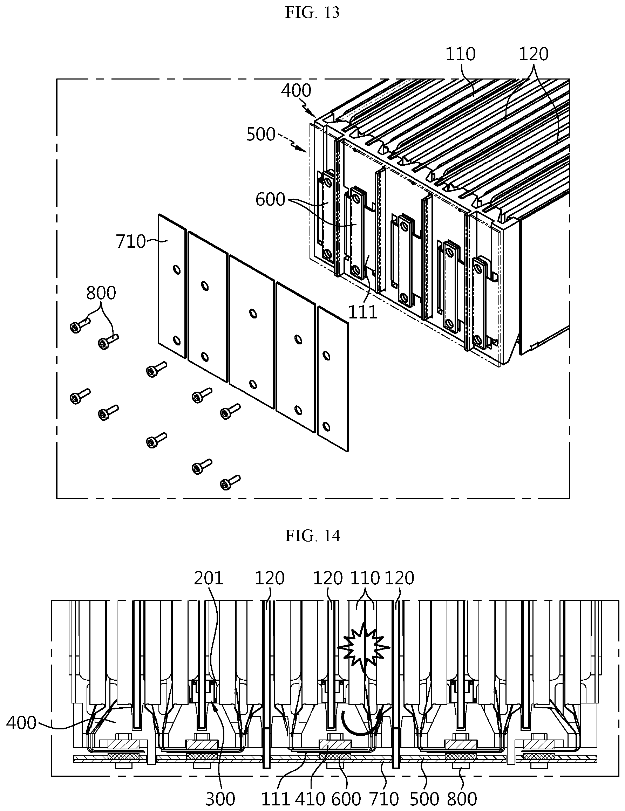

FIG. 12 is a diagram showing an example in which a cell stack and a bus bar frame according to an embodiment of the present disclosure are assembled, FIG. 13 is a diagram showing a bus bar frame to which a frame cover and a compression bus bar are coupled in FIG. 12, and FIG. 14 is a schematic sectional view showing the cell stack and the bus bar frame assembled with each other according to an embodiment of the present disclosure.

Referring to FIGS. 2 and 12 to 14, the battery module 10 according to an embodiment of the present disclosure may further include a plurality of bus bars electrically connected to the electrode leads 111 provided in the battery cells 110, a bus bar frame 400, a frame cover 500, and a close-contact cover 700.

The bus bars may be made of a metal such as copper or aluminum having electrical conductivity and provided in the form of a bar.

The bus bar frame 400 may be provided in a plate shape that supports the bus bars and may cover the front and rear portions of the cell stack 100, respectively. Here, the bus bar frame 400 may be made of an electrically insulating material such as plastic. In addition, the bus bar frame 400 may have lead slots 420 through which the electrode leads 111 may pass. The electrode leads 111 of the battery cells 110 may pass through the lead slots 420 and be attached to the bus bars 410 in a predetermined pattern.

In particular, the battery module 10 of this embodiment is configured so that the electrode leads 111 may be fixed to the bus bars by compressing the electrode leads 111 onto the bus bars instead of welding. Accordingly, the assembly time of the battery module 10 may be shortened and the assembly process may be performed more easily.

Specifically, the bus bar according to an embodiment of the present disclosure includes a first bus bar 410 and a second bus bar 600. Referring to FIGS. 12 and 13, the first bus bar 410 and the second bus bar 600 may be overlapped with the electrode lead 111 interposed therebetween. In addition, the electrode lead 111 may be compressively fixed between the first bus bar 410 and the second bus bar 600. At this time, the first bus bar 410 and the second bus bar 600 may be firmly coupled using a fastening member 800 such as a bolt.

The frame cover 500 is provided in the form of a pad made of a material having low thermal conductivity and excellent heat resistance, such as silicone, aerogel or mica, and may be coupled to face the bus bar frame 400, as shown in FIG. 13. The frame cover 500 may include a plurality of cover plates 510. The cover plates 510 may be provided to respectively correspond to the partition surfaces of the bus bar frame 400 partitioned by barriers 430 protruding from the bus bar frame 400 and distal ends 121 of the barrier plate 120, explained later. Here, the barrier 430 and the distal end 121 of the barrier plate 120 may play a role of preventing a short circuit between the electrode leads 111.

When the frame cover 500 is attached to the bus bar frame 400, the lead slots 420 of the bus bar frame 400 may be covered. In this configuration, when a thermal event occurs, high-temperature gas or flame may not leak out to the front or rear side of the cell stack 100 through the lead slots 420.

The electrode leads 111 may be bent and arranged at the front surface of the corresponding first bus bars 410 according to a predetermined pattern, and then the frame cover 500 may be attached to the bus bar frame 400. Here, the frame cover 500 has a bus bar insert hole H. The second bus bar 600 may be configured to be coupled to the first bus bar 410 with the electrode lead 111 interposed therebetween through the bus bar insert hole H.

The close-contact cover 700 is a component for closely contacting the frame cover 500 to the bus bar frame 400 and also for closely contacting the second bus bar 600 toward the electrode lead 111 and the first bus bar 410.

The close-contact cover 700 may include a plurality of close-contact plates 710, as illustrated in FIG. 13. The close-contact plates 710 are provided in a number corresponding to the bus bars, and the close-contact plates 710 may be coupled to be fixed to each other by each corresponding bus bar and a fastening member 800. In addition, the close-contact plates 710 may be attached between the distal ends 121 of the barrier plates 120 penetrating the bus bar frame 400 and the barriers 430 protruding from the bus bar frame 400. The close-contact plate 710 may be made of a material having high mechanical rigidity and flame retardant properties. For example, the close-contact plate 710 may be made of a rigid material having a high melting point, such as SUS, that is insulated, or a rigid material having fire resistance and insulation properties.

The cell stack 100 according to an embodiment of the present disclosure may include a plurality of barrier plates 120 interposed between the battery cells 110 at predetermined intervals along one direction to restrict the movement of heat or gas between the battery cells 110, as described above.

The distal end 121 of each of the plurality of barrier plates 120 may be fitted into the bus bar frame 400 so that the battery cells 110 and the gas venting holes 201 are partitioned into a predetermined number, as shown in FIGS. 13 and 14.

The barrier plate 120 may be provided in the form of a compressible pad made of a material with excellent heat resistance and/or fire resistance, such as silicone, aerogel, mica, etc.

As illustrated in FIG. 14, the barrier plate 120 may perform a thermal barrier function that blocks heat, such as a flame, generated from an ignited battery cell 110 from spreading in the stacking direction of the battery cells 110. Accordingly, heat propagation to neighboring battery cells 110 may be minimized. The barrier plate 120 may block not only heat but also high-temperature gas, flame, discharge, etc. generated from the battery cells 110. As a result, the barrier member may partition or separate the battery cells 110 to prevent flame, etc. from spreading between the battery cells 110.

Meanwhile, a battery pack according to the present disclosure may include one or more battery modules 10 described above. The battery pack according to the present disclosure may further include a master BMS (Battery Management System) for integrated control of charging and discharging of at least one battery module 10, a current sensor, a fuse, and a pack case for accommodating the components described above.

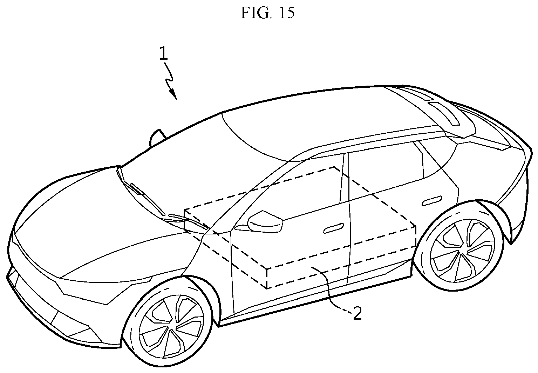

Referring to FIG. 15, the battery pack 2 according to the present disclosure may be used as a driving energy source for an electric vehicle. That is, the battery pack 2 may be used as an electric energy source that provides a driving power to a motor to operate the vehicle. The battery pack 2 may be charged or discharged by an inverter according to the operation of the motor and/or the internal combustion engine. The battery pack 2 may be charged by a regenerative charging device combined with a brake. The battery pack 2 may be electrically connected to the motor of the vehicle 1 through the inverter.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

Also, although terms indicating directions such as upward, downward, left, and right are used in this specification, it is obvious to those skilled in the art that these terms are only for convenience of explanation and may vary depending on the location of the target object or the location of the observer.

## Claims

1. A battery module comprising:
a cell stack including stacked battery cells;
a module case having a gas venting hole in a lower plate and configured to accommodate the cell stack; and
a venting guide member including a body portion having a property that is bendable by heat and a needle portion coupled to the body portion,
wherein the venting guide member is disposed on the lower plate such that when a temperature of the body portion increases higher than a predetermined temperature, the body portion is bent and the needle portion faces and contacts the battery cell.

2. The battery module according to claim 1,
wherein the body portion includes a first metal portion and a second metal portion which are made of different metals having different thermal expansion rates and overlapped vertically.

3. The battery module according to claim 2,
wherein the second metal portion has a higher thermal expansion rate than the first metal portion, and
wherein the venting guide member is disposed on the lower plate of the module case so that the second metal portion faces the lower plate of the module case.

4. The battery module according to claim 1,
wherein the body portion includes a needle insert hole into which the needle portion is inserted; and an elastic member disposed in the needle insert hole and coupled to the needle portion.

5. The battery module according to claim 4,
wherein the lower plate of the module case includes a needle blocking portion configured to compress the elastic member and block a front side of the needle portion to prevent the needle portion inserted into the needle insert hole from protruding.

6. The battery module according to claim 1,
wherein the body portion includes a rotary shaft portion formed to protrude on a side surface thereof, and
wherein the lower plate of the module case has a shaft mounting portion that is fitted into the rotary shaft portion.

7. The battery module according to claim 1,
wherein the lower plate of the module case includes a groove engraved in a shape corresponding to the body portion, and
wherein the venting guide member is inserted into the groove.

8. The battery module according to claim 1,
wherein the needle portion is provided in plurality, and a spacing between the needle portions corresponds to a thickness of the battery cell.

9. The battery module according to claim 1,
wherein the module case includes:
a top plate configured to cover an upper portion of the cell stack;
a bottom plate configured to cover a lower portion of the cell stack and formed on the lower plate;
a pair of side plates configured to cover both sides of the cell stack, respectively; and
a pair of end covers configured to cover a front side and a rear side of the cell stack, respectively.

10. The battery module according to claim 9,
wherein the battery cells are pouch-type battery cells,
wherein the gas venting hole is provided in plurality at predetermined intervals along a width direction of the bottom plate, and
wherein the gas venting hole is provided at a location vertically corresponding to a cell terrace formed by thermally fusing pouch sheets in the pouch-type battery cell.

11. The battery module according to claim 10,
wherein the venting guide member is arranged on the bottom plate along a width direction of the bottom plate alternately with the gas venting hole.

12. The battery module according to claim 1, further comprising:
bus bars electrically connected to electrode leads provided to the battery cells; and
a bus bar frame configured to support the bus bars and having lead slots through which the electrode leads passes, the bus bar frame being mounted to a front portion or a rear portion of the cell stack,
wherein the bus bars include a first bus bar and a second bus bar arranged to overlap each other with the electrode lead being interposed therebetween, and the electrode lead is compressively fixed between the first bus bar and the second bus bar.

13. The battery module according to claim 12,
wherein the battery cells are pouch-type battery cells, which are stacked in one direction in a state where broad surfaces thereof are erected,
wherein the cell stack includes a plurality of barrier plates interposed between the battery cells at predetermined intervals along the one direction to restrict movement of heat or gas between the battery cells, and
wherein each of the plurality of barrier plates has a distal end fitted into the bus bar frame so that the battery cells and the gas venting holes are partitioned into a predetermined number.

14. A battery pack comprising the battery module according to any one of claims 1 to 13.
